(19) Europäisches Patentamt
European Patent Office
Office européen des brevets

(11) EP 4 674 876 A1

(12) **EUROPEAN PATENT APPLICATION**
published in accordance with Art. 153(4) EPC

(43) Date of publication:
**07.01.2026 Bulletin 2026/02**

(21) Application number: **24832322.2**

(22) Date of filing: **11.06.2024**

(51) International Patent Classification (IPC):
***C08F 220/00*** (2006.01) ***C08F 236/00*** (2006.01)
***C08L 21/00*** (2006.01) ***C08L 9/06*** (2006.01)
***C08L 91/00*** (2006.01) ***C08L 33/00*** (2006.01)
***C08L 47/00*** (2006.01) ***B60C 1/00*** (2006.01)
***C11C 3/00*** (2006.01) ***C07C 45/72*** (2006.01)

(52) Cooperative Patent Classification (CPC):
**B60C 1/00; C07C 45/72; C08F 220/00; C08F 236/00; C08L 9/06; C08L 21/00; C08L 33/00; C08L 47/00; C08L 91/00; C11C 3/00**

(86) International application number:
**PCT/KR2024/007969**

(87) International publication number:
**WO 2025/005542 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.06.2023 KR 20230082192**
**23.05.2024 KR 20240067219**

(71) Applicant: **Kolon Industries, Inc.**
**Seoul 07793 (KR)**

(72) Inventors:
- **PARK, Hae Sung**
  **Seoul 07793 (KR)**
- **KIM, Min Uk**
  **Seoul 07793 (KR)**

(74) Representative: **Vossius & Partner Patentanwälte Rechtsanwälte mbB**
**Siebertstrasse 3**
**81675 München (DE)**

# (54) PROCESS OIL AND RUBBER COMPOSITION COMPRISING SAME

(57) Provided are a process oil and a rubber composition including the process oil, the process oil including a polymer including unit (A) derived from an ethylenically unsaturated monomer including an ester group, and unit (B) derived from an ethylenically unsaturated monomer including a carboxyl group.

EP 4 674 876 A1

## Description

### Technical Field

The present disclosure relates to a process oil and a rubber composition including the same.

### Background Art

In general tire manufacturing, a green tire is completed from a tire molding composition including a vulcanizing agent and rubber molecules, and the green tire is placed in a vulcanizing mold and vulcanized for a certain period of time under heat and pressure applied to the inner and outer sides of the green tire, thereby crosslinking the vulcanizing agent and the rubber molecules included in the tire molding composition to obtain the tire rubber with stable inherent properties.

In order to determine the appearance of the tire during this vulcanization process, thin tire rubber in the shape of a sack is used inside the green tire. Since tire rubber is used under severe conditions of high temperature and high pressure, it requires properties different from those of other general rubbers. In this situation, the development of tire rubber having excellent performance and a long lifespan may directly lead to cost reduction, and thus research on tire rubber and efforts to improve its problems have been continuously conducted.

Additionally, various types of chemicals are used in tire rubber to improve or strengthen the physical properties required for tires. Among these additives, process oil is used to improve the mixing load when mixing rubber and various chemicals. The process oil is used as a softener to reduce the compounding energy loss required when mixing tire rubber composition components, and to improve the dispersion and compatibility between various materials used in the rubber composition, such as rubber, chemicals, and fillers.

The process oil used in tire rubber compositions is generally a viscous oil consisting of hydrocarbon compounds, such as aromatic components, paraffinic components, and naphthenic components. The process oil widely used in the butyl rubber compounding process is petroleum-based paraffinic oil, and castor oil is mixed and used to improve production efficiency and the physical properties of butyl rubber products.

Meanwhile, it has been continuously pointed out that hydrocarbon compounds commonly used in process oils are petroleum-based oils and may cause problems such as environmental pollution. In particular, since there has recently been increased social demand for eco-friendly raw materials related to Environment Social Governance (ESG) and sustainability and the development of products utilizing such materials, the need for the development of tire process oil using eco-friendly raw materials related to ESG and sustainability is increasing.

### Disclosure of Invention

### Technical Problem

The technical problem to be solved by the present disclosure is to provide a process oil prepared using eco-friendly materials and a rubber composition including the same.

### Solution to Problem

One aspect of the present disclosure relates to a process oil including a polymer including a unit (A) derived from an ethylenically unsaturated monomer including an ester group and a unit (B) derived from an ethylenically unsaturated monomer including a carboxyl group.

Another aspect of the present disclosure relates to a rubber composition including the process oil.

### Advantageous Effects of Invention

The process oil according to the present disclosure includes a polymer including a unit (A) derived from an ethylenically unsaturated monomer including an ester group and a unit (B) derived from an ethylenically unsaturated monomer including a carboxyl group, and the process oil may readily implement excellent compounding processability.

In addition, the process oil has low viscosity and glass transition temperature, thereby may improve low-temperature properties of the rubber composition including the process oil.

### Mode for the Invention

Hereinafter, various aspects and embodiments of the present disclosure will be described in more detail.

Terms or words used in the present application and claims should not be interpreted as limited to their usual or

dictionary meanings, but should be interpreted as meanings and concepts that conform to the technical idea of the present disclosure, based on the principle that the inventors of the present disclosure may appropriately define the concept of the term to explain his or her own disclosure in the best way.

The terminology used in the present disclosure is used only to describe particular embodiments and is not intended to limit the present disclosure. Singular expressions include plural expressions unless the context clearly indicates otherwise. In the present disclosure, it should be understood that terms such as 'includes' or 'has,' etc., are intended to specify the presence of a feature, number, step, operation, component, part or combination thereof described in the disclosure, but do not exclude in advance the possibility of the presence or addition of one or more other features, numbers, steps, operations, components, parts or combinations thereof.

Specifically, one aspect of the present disclosure provides a process oil including a polymer including a unit (A) derived from an ethylenically unsaturated monomer including an ester group and a unit (B) derived from an ethylenically unsaturated monomer including a carboxyl group.

For example, the process oil includes a polymer including a unit (A) derived from an ethylenically unsaturated monomer including an ester group and a unit (B) derived from an ethylenically unsaturated monomer including a carboxyl group, thereby may readily implement excellent compounding processability.

In addition, since the process oil has low viscosity and glass transition temperature, a rubber composition including the process oil may have excellent low-temperature properties.

According to an embodiment, the ethylenically unsaturated monomer including an ester group may be represented by the following Formula 1, and the ethylenically unsaturated monomer including a carboxyl group may be represented by the following Formula 2.

<Formula 1>

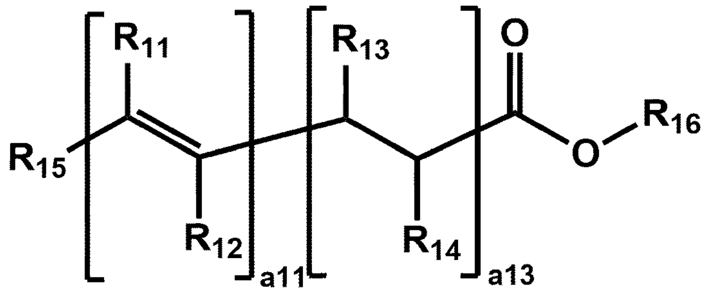

<Formula 2>

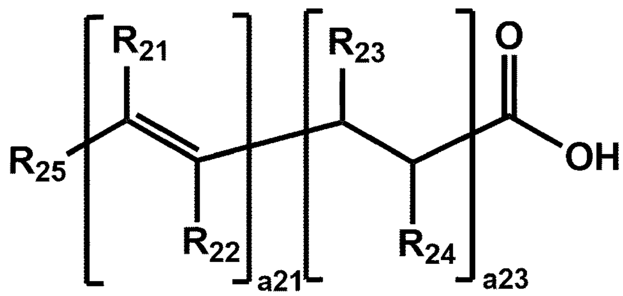

wherein in Formulae 1 and 2:

$R_{11}$ to $R_{14}$ and $R_{21}$ to $R_{24}$ are independently hydrogen or an alkyl group having 1 to 20 carbon atoms, $R_{15}$, $R_{16}$ and $R_{25}$ are independently an alkyl group having 1 to 20 carbon atoms, a11 and a21 are independently an integer of 1 to 20, and a13 and a23 are independently an integer of 1 to 50.

According to an embodiment, in the Formulae 1 and 2, $R_{11}$ to $R_{14}$ and $R_{21}$ to $R_{24}$ may independently be hydrogen, a methyl group or an ethyl group, and $R_{15}$, $R_{16}$ and $R_{25}$ may independently be a methyl group, an ethyl group or a propyl group.

According to an embodiment, in the Formulae 1 and 2, $R_{11}$ to $R_{14}$ and $R_{21}$ to $R_{24}$ are each hydrogen, and $R_{15}$, $R_{16}$ and $R_{25}$ may be independently a methyl group, an ethyl group or a propyl group.

According to an embodiment, in the Formulae 1 and 2, a11 and a21 may independently be an integer of 1 to 15, an integer of 1 to 12, an integer of 1 to 9, an integer of 1 to 6, an integer of 1 to 5, or an integer of 1 to 3.

According to an embodiment, in the Formulae 1 and 2, a13 and a23 may be independently an integer of 1 to 50, an

integer of 1 to 45, an integer of 1 to 40, an integer of 1 to 35, an integer of 1 to 30, an integer of 1 to 25, an integer of 1 to 20, an integer of 2 to 50, an integer of 4 to 50, an integer of 5 to 50, or an integer of 5 to 20.

According to an embodiment, the molar ratio of the number of moles of a unit (A) derived from the ethylenically unsaturated monomer including an ester group to the number of moles of a unit (B) derived from the ethylenically unsaturated monomer including a carboxyl group in the polymer may be 1 to 20.

For example, the molar ratio of the number of moles of a unit (A) derived from the ethylenically unsaturated monomer including an ester group to the number of moles of a unit (B) derived from the ethylenically unsaturated monomer including a carboxyl group in the polymer may be 1 to 18, 1 to 16, 1 to 14, 1 to 12, 1 to 10, 1 to 8, 2 to 20, 2 to 10, 3 to 20, 3 to 10, or 3 to 8.

According to an embodiment, at least one of the ethylenically unsaturated monomer including an ester group and the ethylenically unsaturated monomer including a carboxyl group may be derived from cooking oil.

For example, the cooking oil may include fatty oils that are liquid at room temperature, such as rapeseed oil or salad oil, and fats that are solid at room temperature, such as palm oil or hydrogenated oil. For example, the cooking oil may be waste cooking oil. Waste cooking oil may refer to cooking oil remaining after using the cooking oil.

According to an embodiment, the ethylenically unsaturated monomer including an ester group and the ethylenically unsaturated monomer including a carboxyl group may each be derived from cooking oil.

For example, if each of the ethylenically unsaturated monomer including an ester group and the ethylenically unsaturated monomer including a carboxyl group is derived from cooking oil, the polymer may be a self-polymer of the cooking oil. For example, the self-polymer of the cooking oil may refer to a polymer formed by polymerizing an ethylenically unsaturated monomer including an ester group and an ethylenically unsaturated monomer including a carboxyl group included in the same cooking oil. For example, a self-polymer refers to a polymer in which an ethylenically unsaturated monomer including an ester group included in the cooking oil and/or an ethylenically unsaturated monomer including a carboxyl group are polymerized. For example, self-polymerization refers to polymerization of the ethylenically unsaturated monomers included in the cooking oil with each other.

According to an embodiment, the polymer may be a dimer. For example, the dimer may be a polymer in which two monomer molecules are bonded. For example, the dimer may refer to a polymer in which two ethylenically unsaturated monomer molecules included in the cooking oil are bonded. For example, the ethylenically unsaturated monomer included in the cooking oil may include an ester group or a carboxyl group.

According to an embodiment, the polymer may include two or more of: a dimer including a unit (A) derived from an ethylenically unsaturated monomer including an ester group; a dimer including a unit (B) derived from an ethylenically unsaturated monomer including a carboxyl group; and a dimer including a unit (A) derived from an ethylenically unsaturated monomer including an ester group and a unit (B) derived from an ethylenically unsaturated monomer including a carboxyl group.

The polymer may include: a dimer including a unit (A) derived from an ethylenically unsaturated monomer including an ester group; a dimer including a unit (B) derived from an ethylenically unsaturated monomer including a carboxyl group; and a dimer including a unit (A) derived from an ethylenically unsaturated monomer including an ester group and a unit (B) derived from an ethylenically unsaturated monomer including a carboxyl group.

According to an embodiment, the molar ratio of: the number of moles of the dimer including a unit (A) derived from an ethylenically unsaturated monomer including an ester group; the number of moles of the dimer including a unit (B) derived from an ethylenically unsaturated monomer including a carboxyl group; the number of moles of the dimer including a unit (A) derived from an ethylenically unsaturated monomer including an ester group and a unit (B) derived from an ethylenically unsaturated monomer including a carboxyl group; may be 1 to 35:1 to 35:50 to 98.

The number of moles of the dimer including a unit (A) derived from an ethylenically unsaturated monomer including an ester group is the number of moles of the dimer including a unit (A) derived from an ethylenically unsaturated monomer including an ester group, excluding the dimer including both a unit (A) derived from an ethylenically unsaturated monomer including an ester group and a unit (B) derived from an ethylenically unsaturated monomer including a carboxyl group.

The number of moles of the dimer including a unit (B) derived from an ethylenically unsaturated monomer including a carboxyl group is the number of moles of the dimer including a unit (B) derived from an ethylenically unsaturated monomer including a carboxyl group, excluding the dimer including both a unit (A) derived from an ethylenically unsaturated monomer including an ester group and a unit (B) derived from an ethylenically unsaturated monomer including a carboxyl group. For example, the number of moles of the dimer including a unit (A) derived from an ethylenically unsaturated monomer including an ester group in the polymer may be 1 to 35 mol%, 1 to 30 mol%, 25 mol% or less, 2 to 25 mol%, 2.5 to 25 mol%, 3 to 25 mol%, 1 to 23 mol%, 1 to 22 mol%, 1 to 17 mol%, 2.5 to 17 mol%, or 3 to 16 mol% with respect to the total number of moles of the polymer.

For example, the number of moles of the dimer including a unit (B) derived from an ethylenically unsaturated monomer including a carboxyl group in the polymer may be 1 to 35 mol%, 1 to 30 mol%, 1 to 25 mol%, 5 to 30 mol%, 5 to 25 mol%, 7 to 30 mol%, 7 to 25 mol%, 10 to 30 mol%, 12 to 30 mol%, 14 to 30 mol%, 1 to 25 mol%, 1 to 23 mol%, 1 to 20 mol%, 1

to 18 mol%, 6 to 23 mol%, or 7 to 18 mol% with respect to the total number of moles of the polymer.

For example, the number of moles of the dimer including a unit (A) derived from an ethylenically unsaturated monomer including an ester group and a unit (B) derived from an ethylenically unsaturated monomer including a carboxyl group in the polymer may be 50 to 98 mol%, 50 to 90 mol%, 50 to 87 mol%, 50 to 85 mol%, 50 to 80 mol%, 55 to 90 mol%, 56 to 90 mol%, 66 to 90 mol%, 67 to 90 mol%, 66 to 79 mol%, or 67 to 78 mol% with respect to the total number of moles of the polymer. For example, the polymer may include two or more of: a dimer including two units (A), derived from an ethylenically unsaturated monomer including an ester group; a dimer including two units (B), derived from an ethylenically unsaturated monomer including a carboxyl group; and a dimer including one unit (A) derived from an ethylenically unsaturated monomer including an ester group and one unit (B) derived from an ethylenically unsaturated monomer including a carboxyl group, respectively. For example, the polymer may include: a dimer including two units (A), derived from an ethylenically unsaturated monomer including an ester group; a dimer including two units (B), derived from an ethylenically unsaturated monomer including a carboxyl group; and a dimer including one unit (A) derived from an ethylenically unsaturated monomer including an ester group and one unit (B) derived from an ethylenically unsaturated monomer including a carboxyl group, respectively.

According to an embodiment, the molar ratio of: the number of moles of a dimer including two units (A), derived from an ethylenically unsaturated monomer including an ester group; to the number of moles of a dimer including two units (B), derived from an ethylenically unsaturated monomer including a carboxyl group; to the number of moles of a dimer including one unit (A) derived from an ethylenically unsaturated monomer including an ester group and one unit (B) derived from an ethylenically unsaturated monomer including a carboxyl group, respectively, may be 1 to 35 : 1 to 35 : 50 to 98.

For example, the number of moles of the dimer including two units (A) derived from an ethylenically unsaturated monomer including an ester group in the polymer may be 1 to 35 mol%, 1 to 30 mol%, 25 mol% or less, 2 to 25 mol%, 2.5 to 25 mol%, 3 to 25 mol%, 1 to 23 mol%, 1 to 22 mol%, 1 to 17 mol%, 2.5 to 17 mol%, or 3 to 16 mol% with respect to the total number of moles of the polymer.

For example, the number of moles of the dimer including two units (B), derived from an ethylenically unsaturated monomer including a carboxyl group, in the polymer may be 1 to 35 mol%, 1 to 30 mol%, 1 to 25 mol%, 5 to 30 mol%, 5 to 25 mol%, 7 to 30 mol%, 7 to 25 mol%, 10 to 30 mol%, 12 to 30 mol%, 14 to 30 mol%, 1 to 25 mol%, 1 to 23 mol%, 1 to 20 mol%, 1 to 18 mol%, 6 to 23 mol%, or 7 to 18 mol% with respect to the total number of moles of the polymer.

For example, the number of moles of the dimer including one unit (A) derived from an ethylenically unsaturated monomer including an ester group and one unit (B) derived from an ethylenically unsaturated monomer including a carboxyl group, respectively, in the polymer, may be 50 to 98 mol%, 50 to 90 mol%, 50 to 87 mol%, 50 to 85 mol%, 50 to 80 mol%, 55 to 90 mol%, 56 to 90 mol%, 66 to 90 mol%, 67 to 90 mol%, 66 to 79 mol%, or 67 to 78 mol% with respect to the total number of moles of the polymer.

According to an embodiment, the polymer may include two or more of the compounds represented by the following Formulae 3 to 5.

<Formula 3>

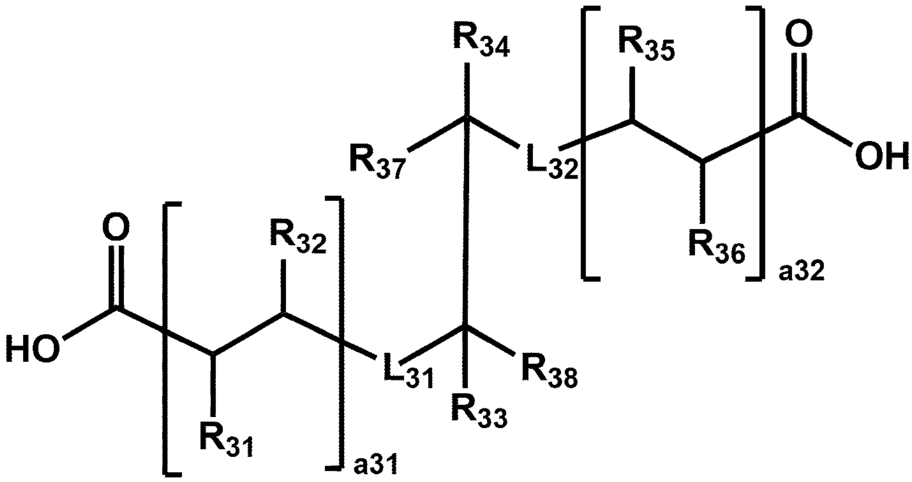

<Formula 4>

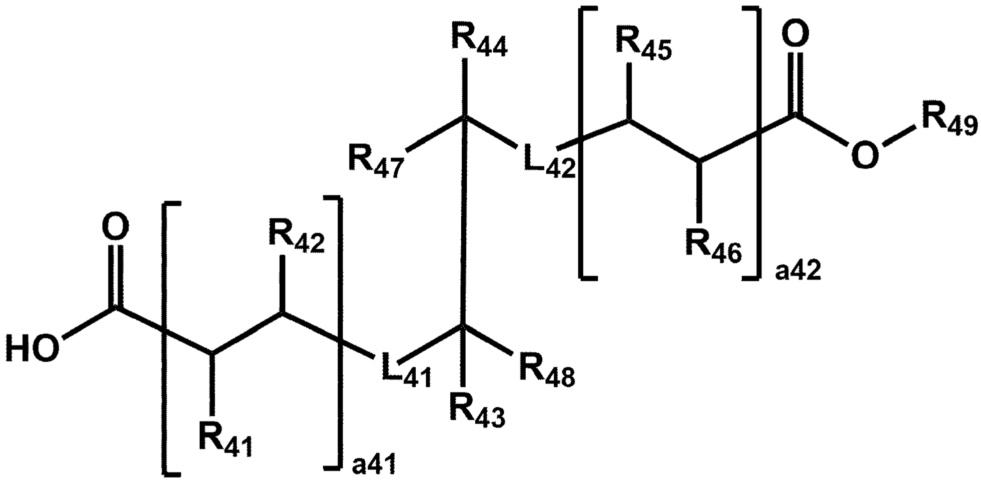

<Formula 5>

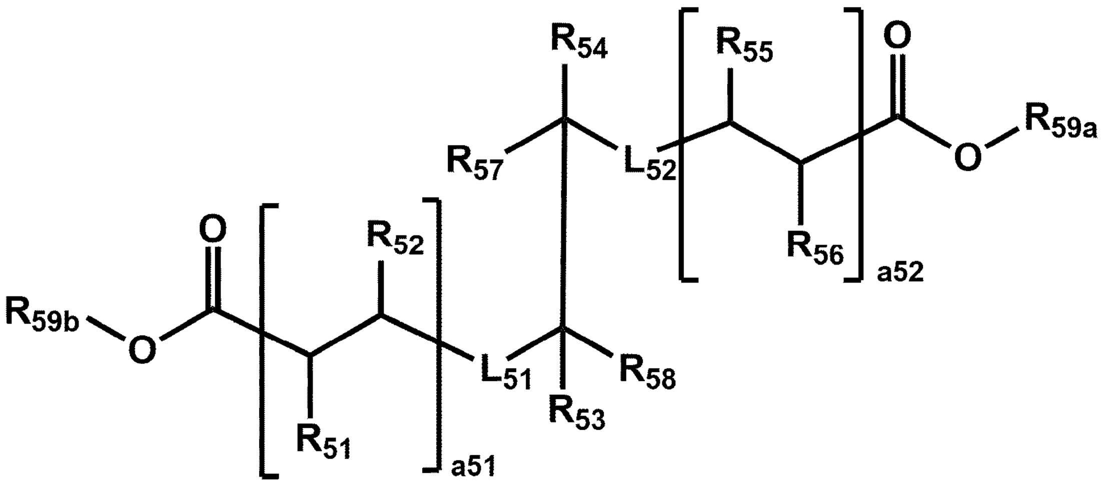

wherein in Formulae 3 and 5:

$L_{31}$, $L_{32}$, $L_{41}$, $L_{42}$, $L_{51}$ and $L_{52}$ are independently a single bond; or an alkylene group having 1 to 20 carbon atoms, unsubstituted or substituted with an alkyl group having 1 to 20 carbon atoms,
$R_{31}$ to $R_{36}$, $R_{41}$ to $R_{46}$ and $R_{51}$ to $R_{56}$ are independently hydrogen or an alkyl group having 1 to 20 carbon atoms,
$R_{37}$, $R_{38}$, $R_{47}$, $R_{48}$, $R_{49}$, $R_{57}$, $R_{58}$, $R_{59a}$ and $R_{59b}$ are independently an alkyl group having 1 to 20 carbon atoms,
a31, a32, a41, a42, a51 and a52 are independently integers from 1 to 50.

According to an embodiment, in the Formulae 3 to 5, $L_{31}$, $L_{32}$, $L_{41}$, $L_{42}$, $L_{51}$ and $L_{52}$ may independently be a single bond, a methylene group, an ethylene group or a propylene group.

According to an embodiment, in the Formulae 3 to 5, $R_{31}$ to $R_{36}$, $R_{41}$ to $R_{46}$ and $R_{51}$ to $R_{56}$ may independently be hydrogen, a methyl group, an ethyl group or a propyl group.

According to an embodiment, in the Formulae 3 to 5, $R_{37}$, $R_{38}$, $R_{47}$, $R_{48}$, $R_{49}$, $R_{57}$, $R_{58}$, $R_{59a}$ and $R_{59b}$ may be a methyl group, an ethyl group, a propyl group or a butyl group.

According to an embodiment, in the Formulae 3 to 5, a31, a32, a41, a42, a51 and a52 may independently be an integer of 1 to 50, an integer of 1 to 45, an integer of 1 to 40, an integer of 1 to 35, an integer of 1 to 30, an integer of 1 to 25, an integer of 1 to 20, an integer of 2 to 50, an integer of 4 to 50, an integer of 5 to 50 or an integer of 5 to 20.

For example, the compound represented by the Formula 3 may be a compound in which two molecules of an ethylenically unsaturated monomer including a carboxyl group are bonded. For example, the compound represented by the Formula 4 may be a compound in which an ethylenically unsaturated monomer including a carboxyl group and an ethylenically unsaturated monomer including an ester group are bonded. For example, the compound represented by the Formula 5 may be a compound in which two molecules of an ethylenically unsaturated monomer including an ester group

are bonded.

According to an embodiment, the polymer may include a compound represented by the Formula 3 and a compound represented by the Formula 4. For example, the polymer may include a compound represented by the Formula 3 and a compound represented by the Formula 5. For example, the polymer may include a compound represented by the Formula 4 and a compound represented by the Formula 5. For example, the polymer may include the compound represented by Formula 3, the compound represented by Formula 4, and the compound represented by Formula 5.

According to an embodiment, the polymer includes a compound represented by the Formula 3, a compound represented by the Formula 4, and a compound represented by the Formula 5, and the molar ratio of the compound represented by the Formula 3 to the number of moles of the compound represented by the Formula 4 to the number of moles of the compound represented by the Formula 5 may be 1 to 35: 1 to 35: 50 to 98.

For example, the number of moles of the compound represented by the Formula 3 in the polymer may be 1 to 35 mol%, 1 to 30 mol%, 1 to 25 mol% or less, 2 to 25 mol%, 2.5 to 25 mol%, 3 to 25 mol%, 1 to 23 mol%, 1 to 22 mol%, 1 to 17 mol%, 2.5 to 17 mol%, or 3 to 16 mol% with respect to the total number of moles of the polymer.

For example, the number of moles of the compound represented by the Formula 4 in the polymer may be 1 to 35 mol%, 1 to 30 mol%, 1 to 25 mol%, 5 to 30 mol%, 5 to 25 mol%, 7 to 30 mol%, 7 to 25 mol%, 10 to 30 mol%, 12 to 30 mol%, 14 to 30 mol%, 1 to 25 mol%, 1 to 23 mol%, 1 to 20 mol%, 1 to 18 mol%, 6 to 23 mol%, or 7 to 18 mol% with respect to the total number of moles of the polymer.

For example, the number of moles of the compound represented by the Formula 5 in the polymer may be 50 to 98 mol%, 50 to 90 mol%, 50 to 87 mol%, 50 to 85 mol%, 50 to 80 mol%, 55 to 90 mol%, 56 to 90 mol%, 66 to 90 mol%, 67 to 90 mol%, 66 to 79 mol%, or 67 to 78 mol% with respect to the total number of moles of the polymer.

According to an embodiment, the weight average molecular weight (Mw) of the process oil may be 500 to 8,000 g/mol, and the number average molecular weight (Mn) of the process oil may be 100 to 5,000 g/mol.

For example, the weight average molecular weight (Mw) of the process oil may be 600 to 8,000 g/mol, 800 to 8,000 g/mol, 1,000 to 8,000 g/mol, 500 to 7,000 g/mol, 500 to 6,000 g/mol, 500 to 5,000 g/mol, 500 to 4,000 g/mol or 1,000 to 4,000 g/mol.

For example, the number average molecular weight (Mn) of the process oil may be 100 to 5,000 g/mol, 200 to 5,000 g/mol, 400 to 5,000 g/mol, 500 to 5,000 g/mol, 100 to 4,500 g/mol, 100 to 4,000 g/mol, 100 to 3,500 g/mol, 100 to 3,000 g/mol, or 500 to 3,000 g/mol.

According to an embodiment, the kinematic viscosity (cst, 40 °C) of the process oil may be 20 cSt to 70 cSt, the glass transition temperature of the process oil may be - 90 °C to -60 °C, the iodine value ($gI_2$/100 g) of the process oil may be 60 to 120, and the acid value (mgKOH/g) of the process oil may be 0.1 to 10. For example, the kinematic viscosity (cst, 40 °C) was measured according to ASTM D 445. For example, the glass transition temperature was measured using a differential scanning calorimeter (DSC). For example, the iodine value ($gI_2$/100 g) was measured according to ASTM D 5768.

According to an embodiment, the process oil may be prepared by polymerizing an ethylenically unsaturated monomer including an ester group and an ethylenically unsaturated monomer including a carboxyl group.

According to an embodiment, the polymerization may be carried out in the presence of an acid catalyst. For example, the acid catalyst may include an organic acid catalyst, an inorganic acid catalyst, or a Lewis acid catalyst.

According to an embodiment, the organic acid catalyst may include an alkylsulfonic acid having 1 to 6 carbon atoms, an arylsulfonic acid having 6 to 14 carbon atoms, an alkylarylsulfonic acid having 7 to 20 carbon atoms, or an arylalkylsulfonic acid having 7 to 20 carbon atoms.

According to an embodiment, the inorganic acid catalyst may include sulfuric acid, hydrochloric acid, nitric acid, boric acid, or phosphoric acid.

According to an embodiment, the Lewis acid catalyst may include boron 3-chloride ($BCl_3$), aluminum chloride ($AlCl_3$), tin 4-chloride ($SnCl_4$), titanium 4-chloride ($TiCl_4$), vanadium 5-chloride ($VCl_5$), iron 3-chloride ($FeCl_3$), boron 3-fluoride ($BF_3$), and the like, as well as organic aluminum compounds such as chlorodiethyl aluminum ($Et_2AlCl$), dichloroethyl aluminum ($EtAlCl_2$).

According to an embodiment, the acid catalyst may include sulfuric acid, hydrochloric acid, nitric acid, boric acid, phosphoric acid, sulfonic acid, or para toluenesulfonic acid.

According to an embodiment, the content of the catalyst may vary depending on the type of catalyst. For example, when the catalyst is a homogeneous catalyst, the content of the catalyst may be 0.01 to 5 wt%, 0.01 to 3 wt%, 1 to 5 wt%, or 2 to 4 wt% based on the total weight of the reactants. For example, if the catalyst is a heterogeneous catalyst, the content of the catalyst may be 5 to 200 wt%, 5 to 100 wt%, 20 to 200 wt%, or 20 to 150 wt% based on the total weight of the reactants.

For example, the polymerization may be performed at 40 °C to 100 °C, 45 °C to 100 °C, 50 °C to 100 °C, 40 °C to 90 °C, 40 °C to 80 °C, 40 °C to 70 °C, 40 °C to 60 °C, or 50 °C to 60 °C.

For example, the polymerization may be carried out for 1 hour to 10 hours, 2 hours to 10 hours, 3 hours to 10 hours, 4 hours to 10 hours, 5 hours to 10 hours, 1 hour to 8 hours, 1 hour to 6 hours or 5 hours to 6 hours.

For example, the process oil may be a process oil for tires. The tire process oil may be mixed with rubber during

tire manufacturing to prepare a rubber composition.

Another aspect of the present disclosure provides a rubber composition including raw rubber and the process oil described above.

According to an embodiment, the rubber composition may be a tire rubber composition. For example, a tire or tire tread may be prepared from the tire rubber composition.

According to an embodiment, the raw rubber may include, for example, at least one of isoprene rubber, butadiene rubber, styrene-butadiene rubber, isoprene-butadiene rubber, isoprene-styrene rubber, isoprene-butadiene-styrene rubber, isobutylene, and ethylene-propylene-diene rubber (EPDM).

According to an embodiment, the content of the process oil may be 10 to 50 wt%, 10 to 40 wt%, 10 to 30 wt%, or 15 to 25 wt% based on the total weight of the rubber composition.

According to an embodiment, the rubber composition further includes a tackifier, and the content of the tackifier may be 1 to 10 wt% based on the total weight of the rubber composition. For example, the rubber composition may include the process oil described above, thereby reducing the content of the tackifier included in the rubber composition.

For example, the tackifier may include rosin or rosin derivatives, such as gum rosin, wood rosin, and tall oil rosin, and hydrogenated and disproportionated forms thereof, as well as various derivatives, such as alkyl-phenolic compounds, acetylene-phenolic compounds, and combinations thereof. For example, the tackifier may include alkyl phenols, for example, condensation products of butyl phenol and acetylene, an alkylphenol acetylene resin tackifier, and colorless transparent gum rosin. For example, the tackifier may include an alkylphenol resin tackifier.

According to an embodiment, the rubber composition may further include, in addition to the process oil or the raw rubber, at least one of a reinforcing filler, a vulcanizing agent, a vulcanization accelerator, a crosslinking activator (for example, zinc oxide or stearic acid), and an stabilizer such as a wax. For example, the rubber composition may be suitably blended with materials commonly used in the rubber industry.

For example, reinforcing fillers may include carbon black, silica, titanium dioxide, clay, layered silicate, tungsten, talc, or syndiotactic-1,2-polybutadiene (SPB).

According to an embodiment, the content of the reinforcing filler may be 10 to 90 parts by weight, 30 to 90 parts by weight, or 50 to 90 parts by weight based on 100 parts by weight of the raw rubber.

For example, the vulcanizing agent may include sulfur. For example, the content of the vulcanizing agent may preferably be used in an amount of 1 parts by weight to 5 parts by weight per 100 parts by weight of raw rubber.

For example, the vulcanization accelerator may include at least one of a sulfenamide-based vulcanization accelerator (for example, CBS (2-Benzothlazolesulfenamide, N-cyclohexyl)), a thiuram-based vulcanization accelerator, a thiazole-based vulcanization accelerator, and a guanidine-based vulcanization accelerator (for example, Diphenylguanidine (DPG)). The content of the vulcanization accelerator may be 0.1 to 7 parts by weight or 0.5 to 5 parts by weight per 100 parts by weight of raw rubber.

For example, the crosslinking activator may include zinc oxide or stearic acid. For example, the content of the crosslinking activator may be 1 to 10 parts by weight or 2 to 7 parts by weight per 100 parts by weight of the raw rubber.

Hereinafter, the present disclosure will be described in more detail through examples. These examples are only intended to more specifically illustrate the present disclosure, and it will be apparent to a person of ordinary skill in the art that the scope of the present disclosure is not limited by these examples.

## Preparation Example 1: Preparation of Process Oil

Into a 1 L glassware kettle equipped with a reflux apparatus, 100 g of toluene was added, and a monomer including a methyl ester group extracted from waste cooking oil and a monomer including a carboxyl group extracted from waste cooking oil were added at a molar ratio of 6:1. 1.25 ml of $BF_3$-phenoate was added as a catalyst, and stirred at 40 °C. After a self-polymerization reaction at 60 °C for 6 hours, the temperature was raised to 80 °C. Thereafter, 200 g of water was added and stirred for 20 minutes while maintaining 80 °C. Subsequently, stirring was stopped, and the mixture was allowed to stand until layer separation occurred. After layer separation, the lower layer (water) was removed, and only the upper layer (toluene and reactants) was retained. The temperature was then raised to 180 °C to remove toluene, and residual volatile substances were completely removed under reduced pressure. Thereafter, the mixture was cooled to 40°C to prepare the process oil.

The number of moles of compound (a) including carboxyl groups at both ends included in the process oil: the number of moles of compound (b) including a carboxyl group at one end and an ester group at the other end: the number of moles of compound (c) including ester groups at both ends = 1:2:11.

The number of moles of the compound (A) including an ester group at both ends in the process oil: the number of moles of the compound (B) including an ester group at one end and a carboxyl group at the other end: the number of moles of the compound (C) including a carboxyl group at both ends was measured through structural analysis using HNMR.

## Preparation Example 2

Except that 50 g of toluene was added as a solvent, a polymerization reaction was carried out at 50 °C for 6 hours, and the molar ratio of a monomer including a methyl ester group extracted from waste cooking oil to a monomer including a carboxyl group extracted from waste cooking oil was 7.5:1, the process oil was prepared in the same manner as in Preparation Example 1.
The number of moles of compound (a) including carboxyl groups at both ends included in the process oil: the number of moles of compound (b) including a carboxyl group at one end and an ester group at the other end: the number of moles of compound (c) including ester groups at both ends = 1:6:27.

## Preparation Example 3

Except that 200 g of toluene was added as a solvent and the molar ratio of a monomer including a methyl ester group extracted from waste cooking oil to a monomer including a carboxyl group extracted from waste cooking oil was 3:1, the process oil was prepared in the same manner as in Preparation Example 1.
The number of moles of compound (a) including carboxyl groups at both ends included in the process oil: the number of moles of compound (b) including a carboxyl group at one end and an ester group at the other end: the number of moles of compound (c) including ester groups at both ends = 1:1:4.

## Preparation Example 4

Except that 200 g of toluene was added as a solvent and the molar ratio of a monomer including a methyl ester group extracted from waste cooking oil to a monomer including a carboxyl group extracted from waste cooking oil was 2:1, the process oil was prepared in the same manner as in Preparation Example 1.
The number of moles of compound (a) including carboxyl groups at both ends included in the process oil: the number of moles of compound (b) including a carboxyl group at one end and an ester group at the other end: the number of moles of compound (c) including ester groups at both ends = 2:2:5.

## Preparation Example 5

Except that 200 g of toluene was added as a solvent and the molar ratio of a monomer including a methyl ester group extracted from waste cooking oil to a monomer including a carboxyl group extracted from waste cooking oil was 9:1, the process oil was prepared in the same manner as in Preparation Example 1.
The number of moles of compound (a) including carboxyl groups at both ends included in the process oil: the number of moles of compound (b) including a carboxyl group at one end and an ester group at the other end: the number of moles of compound (c) including ester groups at both ends = 1:1:13.

[Table 1]

| | Ester:Carboxyl | Compound with carboxyl at both ends (a): Compound with carboxyl + ester (b): Compound with ester at both ends (c) |
|---|---|---|
| Preparation Example 1 | 6:1 | 1:2:11 |
| Preparation Example 2 | 7.5:1 | 1:6:27 |
| Preparation Example 3 | 3:1 | 1:1:4 |
| Preparation Example 4 | 2:1 | 2:2:5 |
| Preparation Example 5 | 9:1 | 1:1:13 |

## Evaluation Example 1: Evaluation of Physical Properties of Process Oil

The kinematic viscosity (cst, 40 °C) of the process oil according to Preparation Example 1 to Preparation Example 5 was measured according to ASTM D445, the iodine value ($gI_2$/100 g) was measured according to ASTM D5768, the glass transition temperature (°C) using a differential scanning calorimeter (DSC), and the acid value (mgKOH/g) was measured according to ASTM D 664, the results are each shown in Table 2 below.
The weight average molecular weight and number average molecular weight were measured by gel permeation chromatography (GPC).

[Viscosity Measurement]

The kinematic viscosity (cst, 40 °C) of the process oil was measured using a viscometer (Cannon-Fenske Routine Viscometer). Process oils according to Preparation Example1 to Preparation Example 5 were injected into the viscometer so that the lower spherical space of the viscometer was about half full, and each viscometer was stored in a constant temperature water bath at 40 °C for 30 minutes or more, then, the measurement sample was raised to a certain height of the viscometer using a syringe, and the flow time for the measurement sample to descend to a certain height was measured to calculate the viscosity. The kinematic viscosity (cst, 40 °C) of the process oil was calculated by multiplying the viscosity constant of the process oil by the flow time.

[Acid Value Measurement]

Process oil according to Preparation Example1 to Preparation Example 5 was injected into a 100 ml Erlenmeyer flask. To each flask, 30 mL of toluene, a neutral solvent, was added and stirred to dissolve the process oil. Phenolphthalein (P.P.) indicator was added dropwise, 4 to 6 drops each. The titration of the sample including the process oil was started with 0.1N alcoholic KOH. The sample including the process oil was titrated until the discoloration persisted for 10 seconds or more (end point).

The acid value was calculated according to the following Equation 1.

$$\text{Equation 1: } V(ml) * F * 56.11 * 0.1 / (\text{weight of process oil (g)})$$

V is the titration volume of 0.1 N alcoholic KOH,
F is the correction factor for the 0.1 N alcoholic KOH.

[Iodine Value Measurement]

Each of the process oils according to Preparation Example1 to Preparation Example 5 was weighed at 0.2 g into a 250 ml Erlenmeyer flask. To each flask, 10 mL of cyclohexane was added and stirred to dissolve the process oils according to Preparation Example1 to Preparation Example 5. 25 mL of WIJS solution was added, and placed in a dark place at 20 to 30 °C. If the iodine value was less than 100, the mixture was left to stand in the dark for 30 minutes; if the iodine value was 100 or more, the mixture was left to stand for 1 hour. After the standing period, 20 ml of KI (10 wt%) solution and 100 ml of distilled water were added to completely dissolve the solution. 4 to 6 drops of 1 % starch solution were added dropwise as an indicator. The mixture was titrated with 0.1 N $Na_2S_2O_3$ solution until it became colorless. A blank test was conducted in the same manner.

The iodine value was calculated from Equation 2 below.

$$\text{Equation 2: Iodine value} = (A-B)*1.260*F/(\text{weight of process oil (g)})$$

A is the amount (ml) of 0.1 N $Na_2S_2O_3$ solution consumed in the blank test,
B is the amount (ml) of 0.1 N $Na_2S_2O_3$ solution consumed in the actual test,
F is the correction factor (1) for the 0.1 N $Na_2S_2O_3$ solution.

The WIJS solution is a solution (1 L) prepared by adding non-acetic acid to 7.9 g of iodine trichloride ($ICl_3$) and 8.7 g of iodine, followed by stirring.

[Table 2]

| | Preparation Example 1 | Preparation Example 2 | Preparation Example 3 | Preparation Example 4 | Preparation Example 5 |
|---|---|---|---|---|---|
| Kinematic Viscosity (cst, 40 °C) | 39 | 65 | 25 | 24 | 80 |
| Iodine value ($gI_2$/100 g) | 98 | 70 | 115 | 51 | 118 |
| Tg (°C) | -80 | -65 | -85 | -86 | -63 |
| Acid Value (mgKOH/g) | 6.5 | 9.5 | 4.5 | 4.4 | 9.5 |

(continued)

| | Preparation Example 1 | Preparation Example 2 | Preparation Example 3 | Preparation Example 4 | Preparation Example 5 |
|---|---|---|---|---|---|
| Weight average molecular weight (g/mol) | 1,854 | 1,950 | 1,750 | 1,720 | 1,980 |
| Number average molecular weight (g/mol) | 1,080 | 1,200 | 1,050 | 1,010 | 1,220 |
| Presence of crystallinity (25°C) | None | None | None | Present | None |

**Example 1: Preparation of Rubber Composition**

A rubber composition was prepared by mixing 100 g of styrene butadiene rubber (SBR), 80 g of silica, 8 g of silane, 35 g of the above-mentioned process oil prepared above, 1.5 g of sulfur as a vulcanizing agent, 2 g of CBS (2-Benzothlazolesulfenamide, N-cyclohexyl) and 2 g of DPG (Diphenylguanidine) as a vulcanization accelerator, and 3 g of zinc oxide and 2 g of stearic acid as a crosslinking promoter.

**Examples 2 to 5**

Except for the correction of the type of the process oil as shown in Table 3 below, a rubber composition was prepared in the same manner as in Example 1.

**Comparative Examples 1 to 3**

Except for the correction of the type of the process oil and the content of the tackifier used as shown in Table 3 below, a rubber composition was prepared in the same manner as in Example 1.

[Table 3]

| | SBR(g) | Process oil | |
|---|---|---|---|
| | | Type | Content |
| Example 1 | 100 | Preparation Example 1 | 35 |
| Example 2 | 100 | Preparation Example 2 | 35 |
| Example 3 | 100 | Preparation Example 3 | 35 |
| Example 4 | 100 | Preparation Example 4 | 35 |
| Example 5 | 100 | Preparation Example 5 | 35 |
| Comparative Example 1 | 100 | TDAE | 35 |
| Comparative Example 2 | 100 | RAE | 35 |
| Comparative Example 3 | 100 | Waste cooking oil | 35 |
| TDAE: Treated Distillate Aromatic Extract<br>RAE: Residual Aromatic Extract | | | |

**Evaluation Example 2. Evaluation of Physical Properties of Rubber Compositions**

Mooney viscosity (100 °C), T05 (125 °C), T35 (125 °C), rheometer (160 °C), mechanical properties, hardness and dynamic properties of the rubber compositions for tires according to Examples 1 to 5 and Comparative Examples 1 to 3, and the results are shown in Tables 4 and 5 below.

[Mooney Viscosity (100 °C)]

Mooney viscosity was used to evaluate the processability of rubber, and the flow resistance of a rubber sample

was measured while the rotor rotated at a speed of 2 rpm at a measurement temperature (100 °C). When resistance is applied to the rotor and the torque is 84.67 kgfcm, the Mooney viscosity is defined as 100, and the Mooney viscosity of each of the tire rubber compositions according to Examples 1 to 5 and Comparative Examples 1 to 3 was calculated from the torque applied when the rotor rotates at a speed of 2 rpm. The displacement from 0 to 100 M was 2.54 mm.

[T05 (125 °C)]

For each of the rubber compositions for tires according to Examples 1 to 5 and Comparative Examples 1 to 3, the time elapsed from the time the minimum Mooney viscosity (Vm) was reached at 125 °C until the vulcanization reaction began and the minimum Mooney viscosity (Vm) increased by 5 M (12.7 mm) was measured.

[T35 (125 °C)]

For each of the rubber compositions for tires according to Examples 1 to 5 and Comparative Examples 1 to 3, the elapsed time (t1) from the time when the minimum Mooney viscosity (Vm) reached at 125 °C until the vulcanization reaction began and the minimum Mooney viscosity (Vm) increased by 35 M (88.9 mm) was measured, and then T35 (125 °C) was measured from the time obtained by subtracting the elapsed time (t2) from the elapsed time (t1) until the minimum Mooney viscosity (Vm) increased by 5 M (12.7 mm).

[Rheometer Measurement (160 °C)]

The rheometer is used to evaluate the optimal vulcanization conditions (temperature, time) of rubber, at 165 °C, shear strain was applied to the rubber compositions for tires according to Examples 1 to 5 and Comparative Examples 1 to 3 by vibrating the lower die at an angle of ±1°, and as the vulcanization reaction of the rubber compositions proceeded, torque (Ibfin) was measured by a sensor connected to the upper die according to the progress of the vulcanization reaction.

(1) Rheometer (160 °C) Toq.(min) and Toq.(max): From the rheometer curve measured by the sensor, the minimum torque value (Toq.(min)) and maximum torque value (Toq.(max)) were measured, respectively. The lower the Toq.(min), the lower the Mooney viscosity tended to be, and the higher the Toq.(max), the higher the hardness and modulus tended to be.

(2) Rheometer (160 °C) T90 (optimal vulcanization time): The time at which the torque reached 90 % of the maximum torque value was measured.

[Mechanical Property Evaluation]

To evaluate mechanical properties after vulcanization of the rubber compositions for tires according to Examples 1 to 5 and Comparative Examples 1 to 3, stress (force per unit area) and strain (deformation per unit length) were measured using a load cell that converts physical quantities such as force or load into electrical signals.

(1) Tensile strength: The vulcanized rubber samples according to Examples 1 to 5 and Comparative Examples 1 to 3 were stretched, and the maximum stress per unit area ($kg/cm^2$) at the breaking point was measured.
(2) Elongation: The vulcanized rubber samples according to Examples 1 to 5 and Comparative Examples 1 to 3 were stretched at a constant speed, and the ratio of the increased length at the breaking point compared to the original length was measured.
(3) 100% elastic modulus and 300 % elastic modulus: The vulcanized rubber samples according to Examples 1 to 5 and Comparative Examples 1 to 3 were stretched, and the stress ($kg/cm^2$) at specific strains (100 % and 300 %) was measured.

[Hardness]

The hardness of the vulcanized rubber samples according to Examples 1 to 5 and Comparative Examples 1 to 3 was measured. The hardness was measured using a Shore A type durometer. The scale of the durometer is divided from 0 (very flexible) to 100 (stiff), and the load was applied to the rubber sample in the form of a static load and a spring.

[Dynamic Properties]

To evaluate the viscoelastic behavior of the vulcanized rubber samples according to Examples 1 to 5 and

Comparative Examples 1 to 3, each rubber sample was subjected to vibrating force or deformation, and the Tanδ value and Tg value according to temperature changes were measured from the elastic modulus (Modulus) and energy loss (damping).

(1) Tanδ (0 °C): Tanδ value at 0 °C, which is an index of wet grip performance.
(2) Tanδ (25 °C): Tanδ value at 25 °C, which is an index of dry grip performance.
(3) Tanδ (60 °C): Tanδ value at 60 °C, which is an index of rolling resistance.
(4) Tg (°C): Temperature at which the Tanδ value is maximum. The Tg of the vulcanized rubber samples according to Examples 1 to 5 and Comparative Examples 1 to 3 was measured using DMA Q800 (TA) in Multi-Frequency-Strain mode under the following conditions.

- Preload force: 0.01 N
- Poisson's ratio: 0.44
- Clamp type: Tension film
- Frequency: 11 Hz
- Measurement temperature range: -50 °C (maintained for 5 minutes) to 75 °C,
- Heating rate: 3 °C/min

[Table 4]

| | Example 1 | Example 2 | Example 3 | Example 4 | Example 5 |
|---|---|---|---|---|---|
| Mooney Viscosity (100 °C) | 72 | 73 | 70 | 68 | 78 |
| T05 (125 °C) | 23 | 19 | 23 | 22 | 25 |
| T35 (125 °C) | 35.8 | 29.8 | 34 | 33 | 30 |
| Rheometer (160 °C) Toq. (max) | 29.2 | 33.1 | 27.6 | 25.4 | 32 |
| Rheometer (160 °C) Toq. (min) | 7.1 | 7.5 | 6.5 | 6.4 | 7.4 |
| Rheometer (160 °C) T90 | 9.1 | 8.2 | 8.8 | 8.8 | 8.3 |
| Hardness | 73 | 75 | 72 | 70 | 75 |
| 100 % Elasticity | 45 | 53 | 43 | 42 | 53 |
| ($kg/cm^2$) | | | | | |
| 300 % Elasticity ($kg/cm^2$) | 145 | 165 | 139 | 134 | 164 |
| Tensile Strength ($kg/cm^2$) | 200 | 210 | 190 | 185 | 212 |
| Elongation (%) | 405 | 380 | 420 | 450 | 375 |
| Tg (°C) | -27 | -23 | -30 | -30 | -23 |
| Tanδ (0 °C) | 0.2605 | 0.2913 | 0.2280 | 0.2240 | 0.2915 |
| Tanδ (25 °C) | 0.1717 | 0.1775 | 0.1622 | 0.1620 | 0.1782 |
| Tanδ (60 °C) | 0.1333 | 0.1404 | 0.1252 | 0.1250 | 0.1408 |

[Table 5]

| | Comparative Example 1 | Comparative Example 2 | Comparative Example 3 |
|---|---|---|---|
| Mooney Viscosity (100 °C) | 80 | 81 | 78 |
| T5 (125 °C) | 26 | 23 | 22 |
| T35 (125 °C) | 38.3 | 34.8 | 39 |
| Rheometer (160 °C) Toq. (max) | 39.2 | 35.6 | 25.8 |
| Rheometer (160 °C) Toq. (min) | 8.8 | 7.9 | 6.1 |
| Rheometer (160 °C) T90 | 10.5 | 10.2 | 10.3 |
| Hardness | 77 | 76 | 67 |

(continued)

| | Comparative Example 1 | Comparative Example 2 | Comparative Example 3 |
|---|---|---|---|
| 100 % Elasticity (kg/cm$^2$) | 60 | 54 | 28 |
| 300 % Elasticity | 183 | 166 | 78 |
| (kg/cm$^2$) | | | |
| Tensile Strength (kg/cm$^2$) | 177 | 211 | 172 |
| Elongation (%) | 299 | 370 | 588 |
| Tg (°C) | -20 | -18.6 | -36 |
| Tanδ (0 °C) | 0.3514 | 0.3683 | 0.2308 |
| Tanδ (25 °C) | 0.2057 | 0.2158 | 0.1622 |
| Tanδ (60 °C) | 0.1497 | 0.1459 | 0.1252 |

With reference to the Examples and Comparative Examples, Examples 1 to 5 had lower Mooney viscosity compared to comparative examples 1 to 3, thereby improving the compounding processability. In addition, Examples 1 to 5 had lower glass transition temperatures compared to Comparative Examples 1 to 2, exhibiting excellent low-temperature properties and being more easily applicable to winter tires.

In addition, Examples 1 to 5, which polymerized monomers extracted from waste cooking oil, showed improved mechanical properties, such as improved hardness, 100 % elastic modulus, 300 % elastic modulus, tensile strength, and elongation, compared to Comparative Example 3, which used waste cooking oil as is.

The above-described Examples and Comparative Examples are provided for illustrative purposes to explain the present disclosure, and the present disclosure is not limited thereto. Since a person of ordinary skill in the art to which the present disclosure pertains may implement the present disclosure by making various modifications thereto, the technical scope of the present disclosure should be defined by the appended claims.

## Claims

1. A process oil comprising a polymer comprising unit (A) derived from an ethylenically unsaturated monomer comprising an ester group and unit (B) derived from an ethylenically unsaturated monomer comprising a carboxyl group.

2. The process oil of claim 1,

   wherein the ethylenically unsaturated monomer comprising the ester group is represented by the following Formula 1,
   and the ethylenically unsaturated monomer comprising the carboxyl group is represented by the following Formula 2:

<Formula 1>

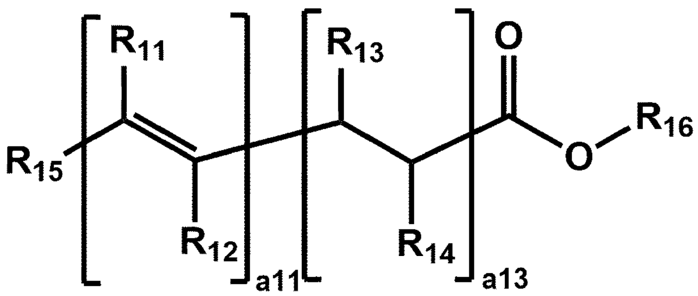

<Formula 2>

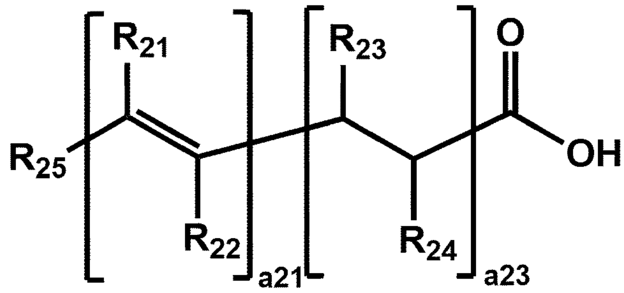

wherein in Formulae 1 and 2:
$R_{11}$ to $R_{14}$ and $R_{21}$ to $R_{24}$ are each independently hydrogen or an alkyl group having 1 to 20 carbon atoms,
$R_{15}$, $R_{16}$ and $R_{25}$ are each independently an alkyl group having 1 to 20 carbon atoms,
a11 and a21 are each independently an integer of 1 to 20,
a13 and a23 are each independently an integer of 1 to 50.

**3.** The process oil of claim 2,
wherein in Formulae 1 and 2:

$R_{11}$ to $R_{14}$ and $R_{21}$ to $R_{24}$ are each independently hydrogen, a methyl group, or an ethyl group,
and $R_{15}$, $R_{16}$ and $R_{25}$ are each independently a methyl group, an ethyl group, or a propyl group.

**4.** The process oil of claim 2,
wherein, in the polymer, a molar ratio of the number of moles of unit (A) derived from the ethylenically unsaturated monomer comprising an ester group to the number of moles of unit (B) derived from the ethylenically unsaturated monomer comprising a carboxyl group is 1 to 20.

**5.** The process oil of claim 1,
wherein at least one of the ethylenically unsaturated monomer comprising an ester group and the ethylenically unsaturated monomer comprising a carboxyl group is derived from cooking oil.

**6.** The process oil of claim 1,
wherein the polymer comprises two or more of a dimer comprising unit (A) derived from the ethylenically unsaturated monomer comprising an ester group, a dimer comprising unit (B) derived from the ethylenically unsaturated monomer comprising a carboxyl group, and a dimer comprising unit (A) derived from the ethylenically unsaturated monomer comprising an ester group and unit (B) derived from the ethylenically unsaturated monomer comprising a carboxyl group.

**7.** The process oil of claim 1,

wherein the polymer comprises two or more of compounds represented by Formulae 3 to 5:

<Formula 3>

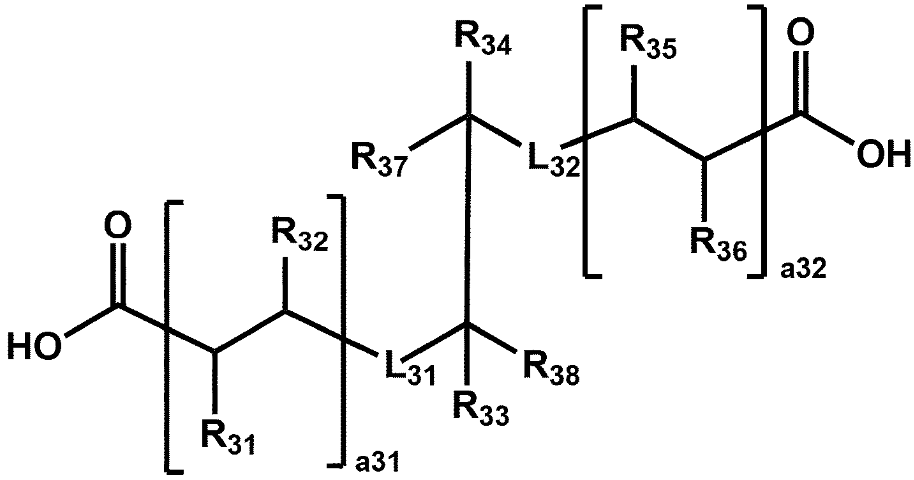

<Formula 4>

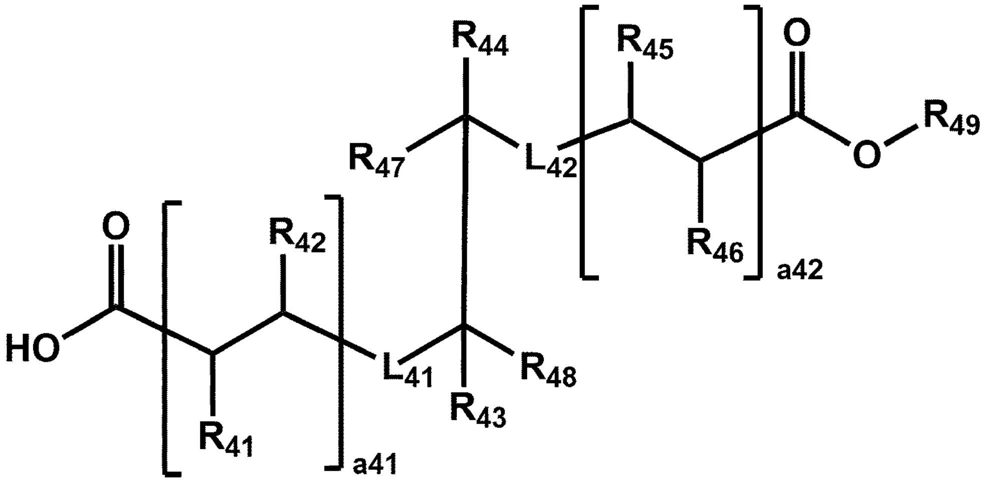

<Formula 5>

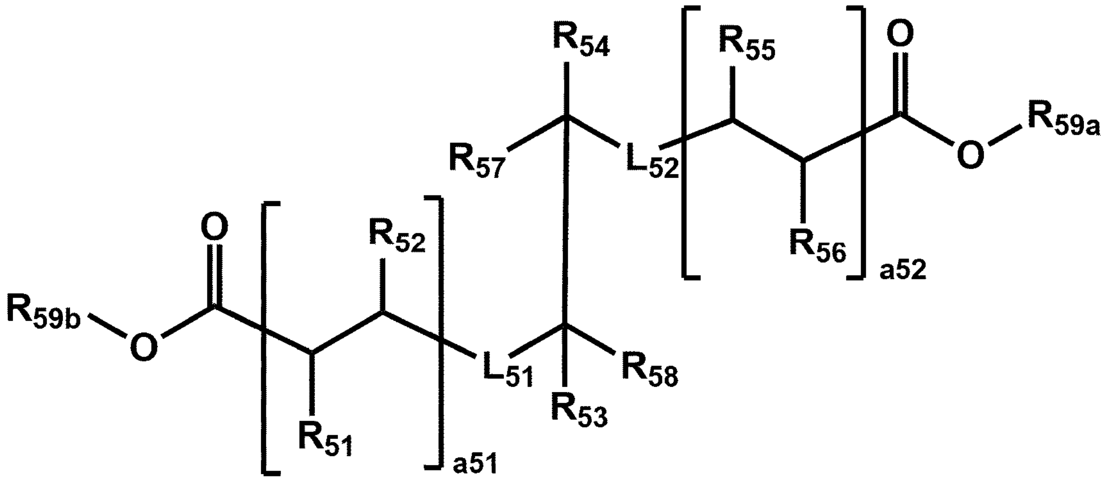

wherein in Formulae 3 to 5:

$L_{31}$, $L_{32}$, $L_{41}$, $L_{42}$, $L_{51}$ and $L_{52}$ are each independently a single bond; or an alkylene group having 1 to 20 carbon atoms, unsubstituted or substituted with an alkyl group having 1 to 20 carbon atoms,

$R_{31}$ to $R_{36}$, $R_{41}$ to $R_{46}$ and $R_{51}$ to $R_{56}$ are each independently hydrogen or an alkyl group having 1 to 20 carbon atoms,
$R_{37}$, $R_{38}$, $R_{47}$, $R_{48}$, $R_{49}$, $R_{57}$, $R_{58}$, $R_{59a}$ and $R_{59b}$ are each independently an alkyl group having 1 to 20 carbon atoms,
a31, a32, a41, a42, a51 and a52 are each independently an integer from 1 to 50.

**8.** The process oil of claim 7,
wherein the polymer comprises the compound represented by Formula 3, the compound represented by Formula 4, and the compound represented by Formula 5.

**9.** The process oil of claim 8,
wherein the number of moles of the compound represented by Formula 3 is 1 to 35 mol% with respect to the total number of moles of the polymer, wherein the number of moles of the compound represented by Formula 4 is 1 to 35 mol% with respect to the total number of moles of the polymer, and the number of moles of the compound represented by Formula 5 is 50 to 98 mol% with respect to the total number of moles of the polymer.

**10.** The process oil of claim 1,

wherein a weight average molecular weight (Mw) of the process oil is 500 to 8,000 g/mol,
and a number average molecular weight (Mn) of the process oil is 100 to 5,000 g/mol.

**11.** The process oil of claim 1,

wherein a kinematic viscosity (cSt, 40 °C) of the process oil is 20 cSt to 70 cSt,
a glass transition temperature of the process oil is -90 °C to -60 °C,
an iodine value ($gI_2$/100 g) of the process oil is 60 to 120,
and an acid value (mg KOH/g) of the process oil is 0.1 to 10.

**12.** The process oil of claim 1,
wherein the process oil is a process oil for tires.

**13.** A rubber composition, comprising:

raw rubber; and
the process oil according to any one of claims 1 to 12.

**14.** The rubber composition of claim 13,
wherein the raw rubber comprises butyl rubber, natural rubber, styrene-butadiene rubber, or butadiene rubber.

**15.** The rubber composition of claim 13,
wherein a content of the process oil is 10 to 50 wt% based on the total weight of the rubber composition.

**16.** The rubber composition of claim 13,
further comprising at least one of a reinforcing filler, a vulcanizing agent, a vulcanization accelerator, a crosslinking activator, and an stabilizer.

**INTERNATIONAL SEARCH REPORT**

International application No. **PCT/KR2024/007969**

**A. CLASSIFICATION OF SUBJECT MATTER**

**C08F 220/00**(2006.01)i; **C08F 236/00**(2006.01)i; **C08L 21/00**(2006.01)i; **C08L 9/06**(2006.01)i; **C08L 91/00**(2006.01)i; **C08L 33/00**(2006.01)i; **C08L 47/00**(2006.01)i; **B60C 1/00**(2006.01)i; **C11C 3/00**(2006.01)i; **C07C 45/72**(2006.01)i

According to International Patent Classification (IPC) or to both national classification and IPC

**B. FIELDS SEARCHED**

Minimum documentation searched (classification system followed by classification symbols)

C08F 220/00(2006.01); B60C 1/00(2006.01); B60C 11/00(2006.01); C08L 21/00(2006.01); C08L 9/06(2006.01); C08L 91/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 공정오일(processing oil), 식용유(cooking oil), 타이어(tire), 에스터기(ester group), 카복실기(carboxylic group), 에틸렌계 불포화 단량체(ethylenic unsaturated monomer)

**C. DOCUMENTS CONSIDERED TO BE RELEVANT**

| Category* | Citation of document, with indication, where appropriate, of the relevant passages | Relevant to claim No. |
|---|---|---|
| A | US 2018-0148566 A1 (THE GOODYEAR TIRE & RUBBER COMPANY) 31 May 2018 (2018-05-31) See claim 1; and paragraphs [0004] and [0013]. | 1-16 |
| A | KR 10-1413175 B1 (KUMHO TIRE CO., INC.) 27 June 2014 (2014-06-27) See claims 1-3. | 1-16 |
| A | KR 10-2017320 B1 (HANKOOK TIRE & TECHNOLOGY CO., LTD.) 02 September 2019 (2019-09-02) See claims 1 and 6-9. | 1-16 |
| A | US 2016-0339744 A1 (BRIDGESTONE AMERICAS TIRE OPERATIONS, LLC) 24 November 2016 (2016-11-24) See claims 1-20. | 1-16 |
| A | KR 10-2009-0030415 A (KUMHO TIRE CO., INC.) 25 March 2009 (2009-03-25) See claims 1 and 2. | 1-16 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 September 2024** | **11 September 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/007969**

| Patent document cited in search report | Publication date (day/month/year) | Patent family member(s) | Publication date (day/month/year) |
|---|---|---|---|
| US 2018-0148566 A1 | 31 May 2018 | BR 102017025531 A2 | 17 July 2018 |
| | | BR 102017025531 B1 | 30 August 2022 |
| | | EP 3326837 A1 | 30 May 2018 |
| | | EP 3326837 B1 | 24 July 2019 |
| | | JP 2018-090789 A | 14 June 2018 |
| | | JP 7104509 B2 | 21 July 2022 |
| KR 10-1413175 B1 | 27 June 2014 | KR 10-2013-0111811 A | 11 October 2013 |
| KR 10-2017320 B1 | 02 September 2019 | KR 10-2019-0094536 A | 14 August 2019 |
| US 2016-0339744 A1 | 24 November 2016 | US 10179479 B2 | 15 January 2019 |
| KR 10-2009-0030415 A | 25 March 2009 | None | |

Form PCT/ISA/210 (patent family annex) (July 2022)